# FASCICULE DE BREVET EUROPEEN

(11) **EP 0 864 953 B1**
(45) Date de publication et mention de la délivrance du brevet: **07.08.2002**
(21) Numéro de dépôt: 98400326.9
(22) Date de dépôt: 12.02.1998
(51) Int. Cl.: G05D 21/02

(54) **Installation de surveillance d'un appareil de génération d'atmosphère**
Überwachungsanlage für Atmosphärenerzeugungsgerät
Monitoring installation for an atmosphere generating apparatus

(30) Priorité: 13.03.1997 FR 9703008
(43) Date de publication de la demande: 16.09.1998
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Pourtaler McSweeny, Pascale, 78350 Les Loges en Josas (FR); Poynot, Philippe, 91190 Gif Sur Yvette (FR)
(74) Mandataire: Mellul-Bendelac, Sylvie Lisette

(56) Documents cités:
- EP-A- 0 457 431
- EP-A- 0 482 992
- EP-A- 0 732 303
- DE-A- 3 239 627
- DE-A- 4 121 277
- DE-A- 4 305 167
- FR-A- 2 595 800
- GB-A- 2 288 254
- US-A- 5 341 980
- US-A- 5 348 592
- US-A- 5 454 918
- US-A- 5 531 218

## Description

La présente invention concerne une installation de surveillance d'un appareil de génération d'atmosphère, du type comportant des moyens de mesure d'au moins un paramètre représentatif du fonctionnement réel de l'appareil, reliés à des moyens d'exploitation des valeurs du ou de chaque paramètre représentatif.

On connaît des appareils de génération d'atmosphère, notamment d'atmosphère de traitements thermiques de métaux et, notamment d'atmosphères dites "de protection". Les traitements envisagés sont notamment le recuit, le revenu, la chauffe avant trempe, le recuit décarburant, le brasage ou le frittage. Une telle atmosphère comprend majoritairement de l'azote et des teneurs contrôlées en espèces réductrices ou carburantes et oxydantes ou décarburantes.

Ces atmosphères sont généralement issues d'un réacteur assurant une combustion incomplète d'un hydrocarbure, tel que du gaz naturel, avec un gaz comburant riche en azote, tel que de l'air ou encore un azote impur ayant une certaine teneur résiduelle en oxygène (le plus souvent supérieure à 0,5%).

Un procédé d'obtention d'une atmosphère de traitement thermique, mettant en oeuvre une telle réaction catalytique est décrit par exemple dans le brevet EP-B-0 482 992 dont la Demanderesse est titulaire.

Les appareils de génération d'atmosphère comportent traditionnellement des boucles de régulation mettant en oeuvre des moyens de mesure d'au moins un paramètre représentatif du fonctionnement réel de l'appareil. Ces moyens sont reliés à des moyens d'exploitation des valeurs prises par le ou chaque paramètre représentatif. Ils sont formés par des régulateurs agissant par exemple sur la température dans le réacteur ou les débits d'entrée des gaz combustible et comburant.

Les appareils munis de telles boucles de régulation fonctionnent correctement en régime établi. Toutefois, les boucles de régulation ne permettent pas de garantir la qualité de l'atmosphère produite en cas de dérives graves de certains paramètres. En particulier, les boucles de régulation ne peuvent assurer une correction suffisante pour remédier au vieillissement prématuré de la masse catalytique contenue dans le réacteur, ou d'autres organes de l'appareil.

Ainsi, la dégradation de certains éléments de l'appareil ne peut être constatée que tardivement par l'utilisateur alors que la qualité de l'atmosphère produite n'est déjà plus satisfaisante.

Les moyens mis en oeuvre actuellement sur les appareils de génération d'atmosphère ne permettent pas de prévoir ses défaillances prochaines et l'incapacité des boucles de régulation à compenser ces défaillances. Ainsi, la détérioration progressive de l'appareil conduit inévitablement à une interruption de celui-ci alors qu'il produit une atmosphère dont la qualité n'est pas conforme aux spécifications. Cet arrêt engendre fréquemment des pertes importantes de production dans le dispositif aval utilisant l'atmosphère.

De plus, avant que l'on puisse constater la dégradation de la qualité de l'atmosphère produite, le dispositif utilisateur situé en aval continue de fabriquer ou de traiter des produits qu'il convient de détruire, ceux-ci ne satisfaisant pas les critères de qualité requis.

Ainsi, l'utilisation de tels appareils de génération d'atmosphère engendre des surcoûts importants lors du vieillissement de ceux-ci.

En outre, la complexité des procédés de génération d'atmosphère mis en oeuvre dans ces appareils rend très difficile la mise en oeuvre d'un programme efficient de maintenance préventive. En effet, le calcul de la durée de vie des différents constituants est d'une grande complexité.

Actuellement, les utilisateurs sont amenés à remplacer fréquemment les constituants de l'appareil de génération alors que ceux-ci ne nécessitent bien souvent pas un tel renouvellement. Cette démarche engendre donc des coûts élevés pour l'exploitation de tels appareils.

L'invention a pour but d'apporter une solution à ces problèmes en fournissant une installation de surveillance, permettant d'éviter les arrêts imprévus de l'appareil de génération d'atmosphère et une maintenance préventive coûteuse.

A cet effet, l'invention a pour objet une installation de surveillance d'un appareil de génération d'atmosphère, du type précité, se caractérisant en ce que lesdits moyens d'exploitation comportent :
- des moyens de mémorisation des valeurs prises au cours du temps par le ou chaque paramètre représentatif,
- des moyens d'évaluation de la dérive du ou de chaque paramètre représentatif au cours du temps, et
- des moyens de déclenchement d'une intervention sur ledit appareil en fonction de ladite dérive, avant que lesdites valeurs du ou de chaque paramètre représentatif n'atteignent des valeurs critiques prédéterminées.

Suivant des modes particuliers de réalisation, l'installation peut comporter l'une ou plusieurs des caractéristiques suivantes :
- lesdits moyens de déclenchement peuvent comporter des moyens d'appréciation de ladite dérive à partir de critères d'appréciation prédéfinis et des moyens de détermination de la nature de l'intervention en fonction du résultat de ladite appréciation ;
- lesdits moyens d'exploitation sont prévus à distance dudit appareil et sont reliés auxdits moyens de mesure par des moyens de télécommunication ;
- lesdits moyens de mesure comportent des moyens de mesure de la teneur en au moins un constituant gazeux de l'atmosphère produite en sortie de l'appareil ;
- ledit appareil est un appareil de génération d'une atmosphère comprenant majoritairement de l'azote et des espèces réductrices ou carburantes et oxydantes ou décarburantes, et mettant en oeuvre une réaction catalytique d'un mélange d'hydrocarbures et d'azote impur ayant une teneur résiduelle en oxygène, préférentiellement supérieure à 0,5 %, et les constituants gazeux dont la teneur est mesurée comprennent au moins un constituant gazeux parmi le dioxyde de carbone, l'eau et le méthane ;
- ledit appareil de génération d'atmosphère comporte un réacteur dans lequel est mise en oeuvre une réaction catalytique et lesdits moyens de mesure comportent des moyens de mesure de la pression dans ledit réacteur, la pression constituant un paramètre représentatif du fonctionnement réel de l'appareil ;
- l'appareil de génération d'atmosphère est relié en aval à un dispositif utilisateur de l'atmosphère produite, et l'installation comporte par ailleurs, reliés aux moyens d'exploitation, des moyens de mesure d'au moins un paramètre représentatif du fonctionnement réel dudit dispositif utilisateur ;
- ledit appareil de génération d'atmosphère est relié en amont à un dispositif de production de gaz utilisés par ledit appareil générateur d'atmosphère l'installation comporte, reliés aux moyens d'exploitation, des moyens de mesure d'au moins un paramètre représentatif du fonctionnement réel dudit dispositif de production.

L'invention sera mieux comprise à la lecture de la description qui va suivre, donnée uniquement à titre d'exemple et faite en se référant à la figure unique annexée, qui est une vue schématique d'une installation mettant en oeuvre un appareil de génération d'atmosphère associé à une installation de surveillance selon l'invention.

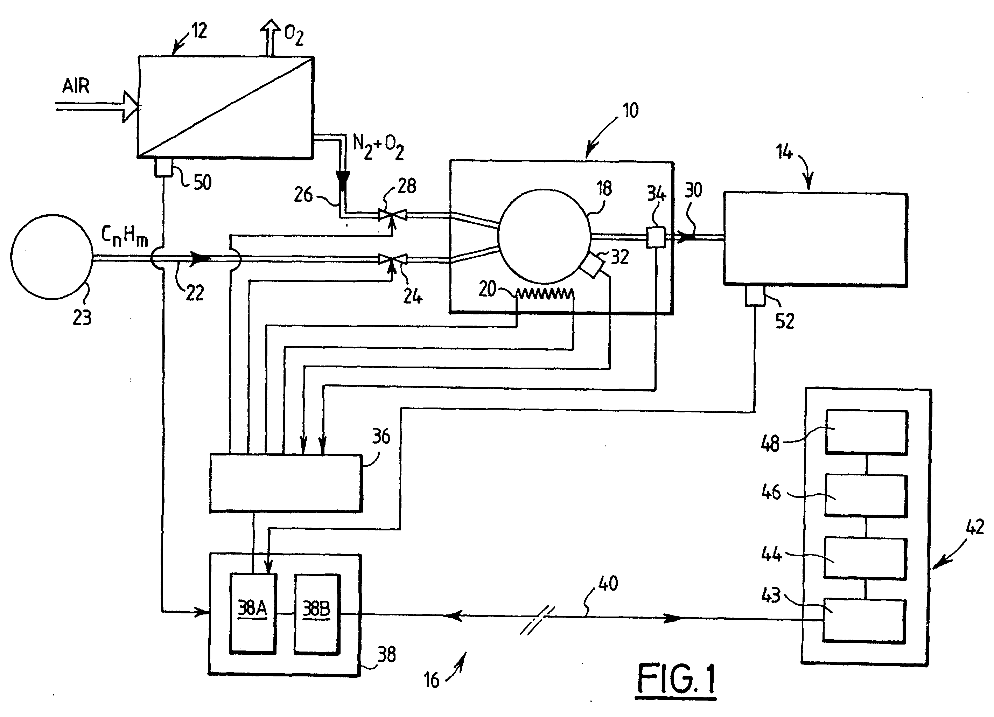

L'installation représentée sur la figure 1 comporte essentiellement un appareil 10 de génération d'atmosphère, en amont duquel est prévu un dispositif 12 de production de gaz, ici constitué d'un dispositif de séparation d'air par perméation et en aval duquel est relié un dispositif 14 utilisant l'atmosphère produite, par exemple ici un four de traitement thermique de pièces métalliques.

En outre, une installation de surveillance 16 est associée à l'appareil de génération d'atmosphère.

L'appareil 10 de génération d'atmosphère est adapté pour la mise en oeuvre d'un procédé d'élaboration catalytique d'une atmosphère de traitement thermique de métaux, par exemple tel que celui décrit dans le brevet EP-B-0 482 992.

Ainsi, l'appareil 10 comporte un réacteur 18 dans lequel est contenu un catalyseur à base de métal précieux, typiquement du platine ou du palladium, sur un support d'alumine. Le réacteur 18 est muni de moyens de chauffage 20, tels que des résistances électriques adaptées pour assurer une température à l'intérieur du réacteur comprise entre 400°C et 900°C.

On conçoit que l'exemple donné ici en liaison avec le document EP-B-0 482 992 n'est qu'illustratif des nombreuses possibilités de mise en oeuvre de l'invention, et que l'on pourrait, sans à aucun moment sortir du cadre de la présente invention, utiliser d'autres types de générateurs d'atmosphère, par exemple utilisant un autre type de réacteur catalytique ou encore mettant en oeuvre une autre gamme de température réactionnelle.

A titre illustratif, on pourrait également, sans sortir du cadre de la présente invention, envisager la mise en oeuvre de catalyseurs à base d'un métal non noble tel le Nickel, mais aussi choisir une gamme de température réactionnelle plus élevée que celle précédemment évoquée, par exemple allant de 900 à 1200°C.

Pour le mode de réalisation représenté, le réacteur 18 est alimenté par une première conduite 22 d'alimentation en gaz combustible tel que du gaz naturel issu d'un stockage 23. Cette conduite comporte une vanne de régulation 24 adaptée pour commander le débit de gaz combustible fourni au réacteur 18.

Le réacteur 18 est en outre alimenté par une conduite 26 d'alimentation en azote impur. Cette conduite est également munie d'une vanne de régulation 28 adaptée pour la commande du débit d'azote impur fourni au réacteur 18.

La conduite 26 est reliée à une sortie d'azote impur du dispositif 12 de séparation d'air par perméation. Ce dispositif est alimenté en air prélevé dans l'atmosphère. Comme connue en soi, une membrane assure la séparation de l'oxygène et de l'azote de l'air, pour produire un premier mélange gazeux riche en azote qui est souvent qualifié d'azote impur (coté « non perméat ») et un second mélange gazeux riche en oxygène (coté « perméat ») Les deux mélanges sont donc évacués par des sorties distinctes du dispositif. Le gaz circulant dans la conduite 26 est formé essentiellement d'azote avec une teneur résiduelle en oxygène gazeux, préférentiellement supérieure à 0,5 % et typiquement comprise entre 3 et 7%.

La sortie du réacteur 18 est reliée au four 14 par une conduite 30. L'atmosphère circulant dans cette conduite 30 est engendrée par la réaction catalytique entre l'oxygène contenue dans l'azote impur et l'hydrocarbure. Cette réaction conduit pour le mode de réalisation illustré, majoritairement à la formation des espèces réductrices nécessaires à la protection du métal, à savoir l'hydrogène et le monoxyde de carbone. Il se forme également mais en quantité moindre de la vapeur d'eau, du dioxyde de carbone et du méthane.

Selon l'invention, l'installation de surveillance 16 de l'appareil de génération d'atmosphère comporte des moyens de mesure d'au moins un paramètre représentatif du fonctionnement de l'appareil. Ces moyens sont formés par des capteurs installés sur l'appareil.

Dans l'exemple représenté, les moyens de mesure comportent un capteur de pression 32 installé directement sur le réacteur 18, ou encore en amont du réacteur, par exemple sur la conduite 26. Ils comportent en outre un ensemble de capteurs 34 installés sur la conduite 30, adapté pour déterminer la teneur de l'atmosphère produite en un certain nombre de constituants gazeux. En particulier, ces constituants gazeux dont la teneur est mesurée peuvent être l'un ou plusieurs des constituants gazeux parmi le dioxyde de carbone, l'eau et le méthane.

Dans l'installation de surveillance 16, les capteurs 32 et 34 sont reliés à des moyens d'exploitation des valeurs prises par le ou chaque paramètre représentatif du fonctionnement réel de l'appareil. Ces moyens d'exploitation comportent des moyens de régulation 36 du fonctionnement de l'appareil 10. Ces moyens 36 sont par exemple formés par un automate programmable.

Les moyens 36 sont reliés par des lignes de commande aux vannes de régulation 24 et 28 ainsi qu'aux moyens de chauffage 20 du réacteur.

En outre, les moyens d'exploitation comportent des moyens 38 de communication reliés aux moyens de régulation 36. Les moyens de communication 38 comportent des moyens de mémorisation 38A des valeurs prises au cours du temps par le ou chaque paramètre représentatif et relevées par les capteurs 32 et 34. Une valeur relevée par chaque capteur est par exemple mémorisée à intervalle de temps régulier, par exemple toutes les cinq secondes. Ces moyens de communication 38 comportent en outre une interface 38B de couplage à un réseau de télécommunication 40, notamment le réseau téléphonique.

Les moyens de communication 38 sont par exemple formés par un micro-ordinateur de type PC associé à un modem. Ils sont reliés à des moyens 42 de suivi à distance des valeurs représentatives du fonctionnement réel de l'appareil 10.

Ces moyens 42 de suivi sont installés à distance de l'appareil 10, et peuvent même se situer sur un autre site. Ils comportent une interface 43 de couplage au réseau et des moyens de mémorisation 44 des valeurs prises au cours du temps par les paramètres représentatifs du fonctionnement de l'appareil.

Les moyens de suivi à distance 42 comportent en outre des moyens 46 d'évaluation de la dérive de l'un ou plusieurs des paramètres représentatifs mémorisés. Ils comportent en outre des moyens 48 de déclenchement d'une intervention sur l'appareil 10 en fonction de la dérive évaluée par les moyens 46, avant que les valeurs du ou de chaque paramètre représentatif n'atteignent une valeur critique prédéterminée.

Les moyens de suivi à distance 42 sont par exemple formés par un micro-ordinateur de type PC relié par un modem au réseau de télécommunication 40. Dans ce micro-ordinateur est chargé un programme assurant la mémorisation des valeurs reçues depuis les moyens de communication 38. A cet effet, le programme assure le transfert des informations entre les moyens 38 et 43 à des instants prédéfinis. Le programme assure en outre l'évaluation de la dérive des paramètres représentatifs mémorisés ainsi que le déclenchement d'une intervention sur ledit appareil si le résultat de l'évaluation de la dérive le justifie.

En particulier, les moyens de déclenchement mis en oeuvre par le programme chargé dans le micro-ordinateur comportent des moyens d'appréciation de la dérive à partir de critères d'appréciation prédéfinis et des moyens de détermination de la nature de l'intervention nécessaire en fonction du résultat de l'appréciation.

A titre d'exemple, on peut acquérir et tracer une courbe montrant l'évolution de la pression relevée dans le réacteur 18 (ou encore à l'entrée du réacteur) par le capteur 32 en fonction du temps. Cette courbe est élaborée à partir des valeurs mémorisées de la pression au cours du temps dans les moyens de mémorisation 44. Elle est établie par les moyens 46 d'évaluation de la pression.

La température dans le réacteur étant variable au cours du temps, la courbe de pression relevée peut être ramenée par le calcul à la pression théorique dans le réacteur pour une température constante donnée.

A cet effet, une sonde de température est installée sur le réacteur 18 et les valeurs de température mesurées sont mémorisées avec les valeurs de pression à chaque instant. Elles sont également transmises aux moyens de suivi à distance 42.

On peut par ailleurs considérer une pression critique que l'on peut noter P_{c} traduisant une pression au-delà de laquelle le catalyseur contenu dans le réacteur 18 doit être régénéré ou remplacé.

On constate alors en général le phénomène suivant : pendant une première période de temps, la pression est sensiblement constante. Dans la période de temps suivante, la pression relevée dans le réacteur augmente sensiblement linéairement.

Cette dérive de la pression pendant la seconde période est évaluée par les moyens d'appréciation, par exemple par le calcul du coefficient directeur de la droite traduisant l'évolution de la pression. On comprend alors que l'augmentation progressive de la pression conduira à ce que la pression dans le réacteur 18 dépasse la pression critique P_{c} au bout d'un certain temps.

Les moyens de détermination de la nature de l'intervention devant être mise en oeuvre comparent le coefficient directeur calculé par les moyens d'évaluation à des valeurs de référence afin de déterminer la nature de l'intervention devant être effectuée sur l'appareil.

Par exemple, si le coefficient directeur est supérieur à une première valeur de référence prédéterminée, ils commanderont l'envoi d'un opérateur sur le site pour procéder au remplacement du catalyseur.

Si le coefficient directeur est supérieur à une seconde valeur de référence prédéterminée, inférieure à la première valeur de référence, les moyens de détermination commanderont la régénération du réacteur par la mise en circulation dans celui-ci d'un gaz de purge, par exemple d'azote d'origine cryogénique.

On comprend qu'avec un tel suivi, il est possible d'intervenir sur l'appareil avant que les performances de celui-ci ne se dégradent et que la qualité de l'atmosphère produite soit insuffisante pour satisfaire les besoins du dispositif consommateur 14.

On conçoit que les moyens d'évaluation et de déclenchement peuvent procéder à des analyses analogues sur d'autres paramètres telles les teneurs de l'atmosphère produite en dioxyde de carbone, en eau et/ou en méthane.

En particulier, les moyens de déclenchement peuvent apprécier la dérive des teneurs en dioxyde de carbone et en eau. Si la teneur en ces deux constituants gazeux augmente, les moyens de déclenchement en déduisent par exemple que l'efficacité du catalyseur baisse. Ils déterminent alors la nature de l'intervention devant être mise en oeuvre.

Si la teneur en méthane dans le réacteur tend à augmenter, les moyens de déclenchement peuvent commander une augmentation de la température dans le réacteur. En effet, une teneur élevée en méthane est nuisible puisqu'elle favorise la formation de suies dans le réacteur.

L'augmentation de la température dans le réacteur peut se faire automatiquement depuis les moyens de suivi à distance, par exemple par l'envoi d'une consigne de température par l'intermédiaire du réseau de communication 40, laquelle consigne est appliquée au régulateur 36 par l'intermédiaire des moyens de communication 38.

En outre, le suivi des dérives au cours du temps d'un ou plusieurs paramètres de l'appareil peut conduire également les moyens de déclenchement à provoquer une modification des consignes de débit des gaz combustible et/ou comburant introduits dans le réacteur 18.

Par ailleurs, un capteur 50 est prévu sur le dispositif 12 de séparation d'air afin de déterminer la teneur en oxygène de l'azote impur produit. Le capteur 50 est relié aux moyens de communication 38 afin de permettre un suivi de cette teneur par les moyens 42 de suivi à distance.

De même, un ensemble de capteurs 52 peut être installé sur le four 14 afin de mesurer certains paramètres représentatifs de son fonctionnement, tels que la température dans certaines zones de celui-ci, la teneur de l'atmosphère en hydrogène, en dioxyde de carbone, en eau, en monoxyde de carbone ou encore en méthane. Cet ensemble de capteurs peut permettre également la mesure de la pression à l'intérieur du four.

De manière analogue, cet ensemble de capteurs est relié aux moyens de communication 38 afin de permettre un suivi de l'évolution de ces différentes paramètres représentatifs par les moyens de suivi à distance 42.

On conçoit qu'un tel mode de réalisation où l'on peut effectuer, à l'aide d'une même installation de surveillance (préférentiellement à distance), le suivi des paramètres représentatifs du fonctionnement tant de l'appareil lui même de génération d'atmosphère, que de dispositifs situés en amont de l'appareil (par exemple des dispositifs de production de gaz utilisés par l'appareil), ou encore que des dispositifs situés en aval de l'appareil de génération d'atmosphère (par exemple de dispositifs utilisateurs de l'atmosphère produite par l'appareil) permet de façon très avantageuse d'effectuer la corrélation des valeurs des paramètres relevées au cours du temps sur les différentes entités afin de permettre la détection et la compréhension rapide de dérives pouvant être préjudiciables au fonctionnement de l'ensemble de l'installation, et non pas seulement d'une portion très partielle de cette installation.

Si la description donnée précédemment en liaison avec la figure s'attachait tout particulièrement à exemplifier le cas d'une source d'azote impur comportant de l'oxygène résiduel, il convient de rappeler ici que l'installation de surveillance selon l'invention décrite ici s'applique de manière beaucoup plus large à d'autres appareils de génération d'atmosphère, par exemple aux appareils mettant en oeuvre une réaction de combustion incomplète à partir d'un hydrocarbure et d'air.

De même, le dispositif utilisateur de l'atmosphère produite par l'appareil peut intervenir dans des domaines extrêmement variés, mais aussi par exemple dans le domaine du soudage ou brasage, ou encore toujours à titre illustratif, pour la fabrication de circuits ou composants électroniques.

## Revendications

1. Installation (16) de surveillance d'un appareil (10) de génération d'atmosphères de traitement thermique, ou de génération d'atmosphères de brasage/soudage, ou de génération d'atmosphères intervenant dans la fabrication de circuits ou composants électroniques, du type comportant des moyens (32, 34) de mesure d'au moins un paramètre représentatif du fonctionnement réel de l'appareil, reliés à des moyens d'exploitation des valeurs du ou de chaque paramètre représentatif, **caractérisée en ce que** lesdits moyens d'exploitation comportent :
- des moyens (44) de mémorisation des valeurs prises au cours du temps par le ou chaque paramètre représentatif,
- des moyens (46) d'évaluation de la dérive du ou de chaque paramètre représentatif au cours du temps, et
- des moyens (48) de déclenchement d'une intervention sur ledit appareil (10) en fonction de ladite dérive, avant que lesdites valeurs du ou de chaque paramètre représentatif n'atteignent des valeurs critiques prédéterminées.

2. Installation selon la revendication 1, **caractérisée en ce que** lesdits moyens de déclenchement (48) comportent des moyens d'appréciation de ladite dérive à partir de critères d'appréciation prédéfinis et des moyens de détermination de la nature de l'intervention en fonction du résultat de ladite appréciation.

3. Installation selon la revendication 1 ou 2, **caractérisée en ce que** lesdits moyens d'exploitation (44, 46, 48) sont prévus à distance dudit appareil (10) et sont reliés auxdits moyens (32, 34) de mesure par des moyens (38, 40, 43) de télécommunication.

4. Installation selon l'une quelconque des revendications précédentes, **caractérisée en ce que** lesdits moyens de mesure comportent des moyens (34) de mesure de la teneur en au moins un constituant gazeux de l'atmosphère produite en sortie de l'appareil (10).

5. Installation selon la revendication 4, **caractérisée en ce que** ledit appareil (10) est un appareil de génération d'une atmosphère comprenant majoritairement de l'azote et des espèces réductrices ou carburantes, et oxydantes ou décarburantes, et mettant en oeuvre une réaction catalytique d'un mélange d'hydrocarbure et d'un azote impur ayant une teneur résiduelle en oxygène, et **en ce que** les constituants gazeux dont la teneur est mesurée comprennent au moins un constituant gazeux parmi le monoxyde de carbone, l'hydrogène, le dioxyde de carbone, l'eau et le méthane.

6. Installation selon la revendication 4, **caractérisée en ce que** ledit appareil (10) est un appareil de génération d'une atmosphère comprenant majoritairement de l'azote et des espèces réductrices ou carburantes, et oxydantes ou décarburantes, et mettant en oeuvre une réaction catalytique d'un mélange d'hydrocarbure et d'air, et **en ce que** les constituants gazeux dont la teneur est mesurée comprennent au moins un constituant gazeux parmi le monoxyde de carbone, l'hydrogène, le dioxyde de carbone, l'eau et le méthane.

7. Installation selon la revendication 4, **caractérisée en ce que** ledit appareil (10) est un appareil de génération d'une atmosphère comprenant majoritairement de l'azote, du CO₂ , et de la vapeur d'eau, et mettant en oeuvre une réaction catalytique d'un mélange d'hydrocarbure et d'air, et **en ce que** les constituants gazeux dont la teneur est mesurée comprennent au moins un constituant gazeux parmi le dioxyde de carbone, l'eau et le méthane.

8. Installation selon la revendication 4, **caractérisée en ce que** ledit appareil (10) est un appareil de génération d'une atmosphère comprenant majoritairement de l'azote, du CO₂ , et de la vapeur d'eau, et mettant en oeuvre une réaction catalytique d'un mélange d'hydrocarbure et d'un azote impur ayant une teneur résiduelle en oxygène, et **en ce que** les constituants gazeux dont la teneur est mesurée comprennent au moins un constituant gazeux parmi le dioxyde de carbone, l'eau et le méthane.

9. Installation selon l'une quelconque des revendications précédentes, **caractérisée en ce que** ledit appareil (10) de génération d'atmosphère comporte un réacteur (18) dans lequel est mise en oeuvre une réaction catalytique et **en ce que** lesdits moyens de mesure comportent des moyens (32) de mesure de la pression dans ledit réacteur ou en amont dudit réacteur, la pression constituant un paramètre représentatif du fonctionnement réel de l'appareil.

10. Installation selon l'une quelconque des revendications précédentes, **caractérisée en ce que** ledit appareil de génération d'atmosphère (10) est relié en aval à un dispositif (14) utilisateur de ladite atmosphère et **en ce qu'**elle comporte, reliés aux moyens d'exploitation, des moyens (52) de mesure d'au moins un paramètre représentatif du fonctionnement réel dudit dispositif utilisateur (14).

11. Installation selon l'une quelconque des revendications précédentes, **caractérisée en ce que** ledit appareil de génération d'atmosphère (10) est relié en amont à un dispositif (12) de production de gaz utilisés par ledit appareil de génération d'atmosphère pour produire ladite atmosphère, et **en ce qu'**elle comporte, reliés aux moyens d'exploitation, des moyens (50) de mesure d'au moins un paramètre représentatif du fonctionnement réel dudit dispositif de production (12).

## Patentansprüche

1. Anlage (16) zur Überwachung eines Geräts (10) zur Erzeugung von Wärmebehandlungsatmosphären oder zur Erzeugung von Löt-/Schweißatmosphären oder zur Erzeugung von an der Herstellung von elektronischen Schaltungen oder Bauteilen beteiligten Atmosphären jener Art, die Mittel (32, 34) zur Messung von mindestens einem für den Istbetrieb des Geräts repräsentativen Parameter umfaßt, die mit Mitteln zur Verarbeitung der Werte des oder jedes repräsentativen Parameters verbunden sind, **dadurch gekennzeichnet, daß** die Verarbeitungsmittel
- Mittel (44) zur Speicherung der im Verlauf der Zeit durch den oder jeden repräsentativen Parameter erfaßten Werte,
- Mittel (46) zur Bewertung der Drift des oder jedes repräsentativen Parameters im Verlauf der Zeit und
- Mittel (48) zum Auslösen eines Eingriffs auf das Gerät (10) in Abhängigkeit der Drift, bevor die Werte des oder jedes repräsentativen Parameters die vorbestimmten kritischen Werte erreichen, umfassen.

2. Anlage nach Anspruch 1, **dadurch gekennzeichnet, daß** die Auslösemittel (48) Mittel zur Auswertung der Drift auf Grundlage vordefinierter Auswertungskriterien und Mittel zur Bestimmung der Art des Eingriffs in Abhängigkeit vom Ergebnis der Bewertung umfassen.

3. Anlage nach Anspruch 1 oder 2, **dadurch gekennzeichnet, daß** die Verarbeitungsmittel (44, 46, 48) in einem Abstand vom Gerät (10) vorgesehen und über Telekommunikationsmittel (38, 40, 43) mit den Meßmitteln (32, 34) verbunden sind.

4. Anlage nach einem der vorhergehenden Ansprüche, **dadurch gekennzeichnet, daß** die Meßmittel Mittel (34) zur Messung des Gehalts an mindestens einer Gaskomponente in der am Auslaß des Geräts (10) erzeugten Atmosphäre umfassen.

5. Anlage nach Anspruch 4, **dadurch gekennzeichnet, daß** das Gerät (10) ein Gerät zur Erzeugung einer Atmosphäre ist, die in erster Linie Stickstoff und reduzierende oder karburierende sowie oxydierende oder dekarburierende Stoffe enthält und eine katalytische Reaktion eines Gemisches aus Kohlenwasserstoff und unreinem Stickstoff mit einem Restsauerstoffgehalt bewirkt und daß die Gaskomponenten, deren Gehalt gemessen wird, mindestens eine Gaskomponente unter Kohlenmonoxid, Wasserstoff, Kohlendioxid, Wasser und Methan umfassen.

6. Anlage nach Anspruch 4, **dadurch gekennzeichnet, daß** das Gerät (10) ein Gerät zur Erzeugung einer Atmosphäre ist, die in erster Linie Stickstoff und reduzierende oder karburierende sowie oxydierende oder dekarburierende Stoffe enthält und eine katalytische Reaktion eines Gemisches aus Kohlenwasserstoff und Luft bewirkt, und daß die Gaskomponenten, deren Gehalt gemessen wird, mindestens eine Gaskomponente unter Kohlenmonoxid, Wasserstoff, Kohlendioxid, Wasser und Methan umfassen.

7. Anlage nach Anspruch 4, **dadurch gekennzeichnet, daß** das Gerät (10) ein Gerät zur Erzeugung einer Atmosphäre ist, die in erster Linie Stickstoff, CO₂ und Wasserdampf umfaßt und eine katalytische Reaktion eines Gemisches aus Kohlenwasserstoff und Luft bewirkt, und daß die Gaskomponenten, deren Gehalt gemessen wird, mindestens eine Gaskomponente unter Kohlendioxid, Wasser und Methan umfassen.

8. Anlage nach Anspruch 4, **dadurch gekennzeichnet, daß** das Gerät (10) ein Gerät zur Erzeugung einer Atmosphäre ist, die in erster Linie Stickstoff, CO₂ und Wasserdampf umfaßt und eine katalytische Reaktion eines Gemisches aus Kohlenwasserstoff und unreinem Stickstoff mit einem Restsauerstoffgehalt bewirkt, und daß die Gaskomponenten, deren Gehalt gemessen wird, mindestens eine Gaskomponente unter Kohlendioxid, Wasser und Methan umfassen.

9. Anlage nach einem der vorhergehenden Ansprüche, **dadurch gekennzeichnet, daß** das Atmosphärenerzeugungsgerät (10) einen Reaktor (18) umfaßt, in dem eine katalytische Reaktion erfolgt, und daß die Meßmittel Mittel (32) zur Messung des Drucks in dem Reaktor oder stromaufwärts des Reaktors umfassen, wobei der Druck einen für den Istbetrieb des Geräts repräsentativen Parameter bildet.

10. Anlage nach einem der vorhergehenden Ansprüche, **dadurch gekennzeichnet, daß** das Atmosphärenerzeugungsgerät (10) stromabwärts mit einer die Atmosphäre benutzenden Vorrichtung (14) verbunden ist und daß es mit den Verarbeitungsmitteln verbundene Mittel (52) zur Messung von mindestens einem für den Istbetrieb der Benutzervorrichtung (14) repräsentativen Parameter umfaßt.

11. Anlage nach einem der vorhergehenden Ansprüche, **dadurch gekennzeichnet, daß** das Atmosphärenerzeugungsgerät (10) stromaufwärts einer Vorrichtung (12) zur Erzeugung der von dem Atmosphärenerzeugungsgerät verwendeten Gase angeschlossen ist, um die Atmosphäre zu erzeugen, und daß sie mit den Verarbeitungsmitteln verbundene Mittel (50) zur Messung von mindestens einem für den Istbetrieb der Erzeugungsvorrichtung (12) repräsentativen Parameter umfaßt.

## Claims

1. Installation (16) for monitoring an apparatus (10) for generating heat-treatment atmospheres, or for generating brazing/soldering atmospheres, or for generating atmospheres involved in the fabrication of electronic circuits or components, of the type including means (32, 34) for measuring at least one parameter representing the actual operation of the apparatus, which are connected to means for processing the values of the or each representative parameter, **characterized in that** the said processing means include :
- means (44) for restoring the values taken over time by the or each representative parameter,
- means (46) for evaluating the drift of the or each representative parameter over time, and
- means (48) for triggering an intervention on the said apparatus (10) as a function of the said drift, before the said values of the or each representative parameter reach predetermined critical values.

2. Installation according to Claim 1, **characterized in that** the said triggering means (48) include means for assessing the said drift on the basis of predefined assessment criteria, and means for determining the nature of the intervention according to the result of the said assessment.

3. Installation according to Claim 1 or 2, **characterized in that** the said processing means (44, 46, 48) are provided at a distance from the said apparatus (10) and are connected to the said measuring means (32, 34) by telecommunication means (38, 40, 43).

4. Installation according to any one of the preceding claims, **characterized in that** the said measuring means include means (34) for measuring the level of at least one gas constituent in the atmosphere produced at the outlet of the apparatus (10).

5. Installation according to Claim 4, **characterized in that** the said apparatus (10) is an apparatus for generating an atmosphere comprising predominantly nitrogen and reducing or carburizing, and oxidizing or decarburizing species, employing a catalytic reaction of a mixture of hydrocarbon and impure nitrogen having a residual oxygen level, and **in that** the gas constituents whose level is measured comprise at least one gas constituent from carbon monoxide, hydrogen, carbon dioxide, water and methane.

6. Installation according to Claim 4, **characterized in that** the said apparatus (10) is an apparatus for generating an atmosphere comprising predominantly nitrogen and reducing or carburizing, and oxidizing or decarburizing species, employing a catalytic reaction of a mixture of hydrocarbon and air, and **in that** the gas constituents whose level is measured comprise at least one gas constituent from carbon monoxide, hydrogen, carbon dioxide, water and methane.

7. Installation according to Claim 4, **characterized in that** the said apparatus (10) is an apparatus for generating an atmosphere comprising predominantly nitrogen, CO₂ and water vapour, employing a catalytic reaction of a mixture of hydrocarbon and air, and **in that** the gas constituents whose level is measured comprise at least one gas constituent from carbon dioxide, water and methane.

8. Installation according to Claim 4, **characterized in that** the said apparatus (10) is an apparatus for generating an atmosphere comprising predominantly nitrogen, CO₂ and water vapour, employing a catalytic reaction of a mixture of hydrocarbon and impure nitrogen having a residual oxygen level, and **in that** the gas constituents whose level is measured comprise at least one gas constituent from carbon dioxide, water and methane.

9. Installation according to any one of the preceding claims, **characterized in that** the said atmosphere generation apparatus (10) includes a reactor (18) in which a catalytic reaction takes place, and **in that** the said measuring means include means (32) for measuring the pressure in the said reactor or upstream of the said reactor, the pressure constituting a parameter representing the actual operation of the apparatus.

10. Installation according to any one of the preceding claims, **characterized in that** the said atmosphere generation apparatus (10) is connected downstream to a device (14) which uses the said atmosphere, and **in that** it includes, connected to the processing means, means (52) for measuring at least one parameter representing the actual operation of the said user device (14).

11. Installation according to any one of the preceding claims, **characterized in that** the said atmosphere generation apparatus (10) is connected upstream to a device (12) for producing the gases used by the said atmosphere generation apparatus in order to produce the said atmosphere, and **in that** it includes, connected to the processing means, means (50) for measuring at least one parameter representing the actual operation of the said production device (12).
